# EUROPÄISCHE PATENTANMELDUNG

(11) **EP 4 484 039 A1**
(43) Veröffentlichungstag der Anmeldung: **01.01.2025**
(21) Anmeldenummer: 23182409.5
(22) Anmeldetag: 29.06.2023
(51) Int. Cl.: B23D 47/02, B25H 1/14, B25H 1/04, B28D 1/04, B28D 7/04

(54) **GESTELL FÜR EINE BEARBEITUNGSMASCHINE, BEARBEITUNGSMASCHINE UND ARBEITSTISCH**

(71) Anmelder: Mafell AG, 78727 Oberndorf a.N. (DE)
(72) Erfinder: HÄHNLE, Oliver, 72461 Albstadt (DE); GÜHRING, Samuel, 72280 Dornstetten (DE); HERMLE, Hans, 78661 Dietingen (DE)
(74) Vertreter: Manitz Finsterwald Patent- und Rechtsanwaltspartnerschaft mbB

(57) **Zusammenfassung**

Ein Gestell (13) für eine Bearbeitungsmaschine (10), weist eine Plattform (15) für die Montage und Demontage eines Arbeitstischs (50a, 50b) an dem Gestell (13) auf. Die Plattform (15) ist mit einer oder mehreren Schnittstellen zum Aufnehmen von unterschiedlichen Arbeitstischen (50a, 50b) versehen.

## Beschreibung

Die Erfindung betrifft ein Gestell für eine Bearbeitungsmaschine, eine Bearbeitungsmaschine sowie einen Arbeitstisch für eine Bearbeitungsmaschine.

Als Bearbeitungsmaschinen kommen grundsätzlich Maschinen zur Bearbeitung und insbesondere zum Trennen unterschiedlicher Materialien in Betracht. Derartige Maschinen sind bekannt und umfassen beispielsweise Steinbearbeitungsmaschinen wie etwa Steintrennmaschinen bzw. Steinsägen, aber auch Holzbearbeitungsmaschinen, etwa Kreissägen oder andere Sägen.

Derartige Bearbeitungsmaschinen müssen regelmäßig umgebaut werden, wenn andere Werkstücke bearbeitet oder andere Trennlängen erzielt werden sollen. Ein solcher Umbau ist jedoch aufwändig, kostet Zeit und damit auch Kosten.

Es ist eine Aufgabe der vorliegenden Erfindung, eine Bearbeitungsmaschine schnell und mit verringertem Aufwand an jeweilige Materialien und Werkstücke anpassen zu können.

Diese Aufgabe wird durch den Gegenstand der unabhängigen Ansprüche gelöst. Vorteilhafte Weiterbildungen sind Gegenstand der abhängigen Ansprüche und ergeben sich aus der Beschreibung sowie den Zeichnungen.

Das erfindungsgemäße Gestell dient der Verwendung für eine Bearbeitungsmaschine, wobei es sich bei der Bearbeitungsmaschine insbesondere um eine Steinbearbeitungsmaschine, beispielsweise eine Steintrennmaschine, handeln kann, mit der man Stein oder steinähnliche Materialien wie Beton oder Ton bearbeiten kann. Denkbar sind etwa auch Holzbearbeitungsmaschinen, etwa Kreissägen oder andere Sägen. Das Gestell weist eine Plattform für die Montage und Demontage eines Arbeitstischs an dem Gestell auf. Die Plattform weist eine oder mehrere Schnittstellen zum Aufnehmen von unterschiedlichen Arbeitstischen auf.

Als Arbeitstisch wird dabei ein Tisch bezeichnet, auf dem das zu bearbeitende Werkstück während der Bearbeitung aufliegt. Der Arbeitstisch kann dabei je nach konkreter Ausgestaltung auf dem Gestell verfahrbar sein, sodass während der Bearbeitung das Werkstück mit dem Arbeitstisch verfahren wird, oder hinsichtlich seiner Position an dem Gestell fixiert sein, sodass während der Bearbeitung nur das Werkstück auf dem Arbeitstisch bewegt wird. Die Arbeitstische können für unterschiedliche Anwendungen oder Materialien ausgestaltet sein, etwa zum Bearbeiten von Dachziegeln.

Erfindungsgemäß ist der Arbeitstisch also über die Plattform an dem Gestell montier- und demontierbar und somit austauschbar bzw. ersetzbar. Darunter wird verstanden, dass der Arbeitstisch vollständig demontierbar ist, sodass keine Teile des Arbeitstischs mehr am Gestell verbleiben und die Arbeitstische dementsprechend auch vollständig getauscht werden können. Dies ermöglicht, dass angepasst an die jeweilige Tätigkeit, insbesondere entsprechend dem jeweiligen Werkstoff, dem Werkstück, insbesondere seiner Form, oder der benötigten Trennlänge, ein dazu passender Arbeitstisch montiert wird.

Bei den Schnittstellen an der Plattform handelt es sich insbesondere um mechanische Schnittstellen, an denen die Arbeitstische montiert werden können. Jede Schnittstelle kann für die Montage genau eines Arbeitstischs oder auch für die Montage mehrerer unterschiedlicher Arbeitstische, sofern diese Arbeitstische korrespondierende Schnittstellen aufweisen, ausgebildet sein. In jedem Fall ist die Plattform geeignet, mehrere unterschiedliche Arbeitstische aufzunehmen, was entweder mittels nur einer Schnittstelle der Plattform oder mittels mehrerer Schnittstellen der Plattform erreicht werden kann.

Unterschiedliche Schnittstellen können an unterschiedlichen Bauteilen oder an gleichen Bauteilen ausgebildet sein. Beispielsweise ist es möglich, eine Profilschiene sowohl als Schnittstelle für einen Arbeitstisch zu nutzen, der verfahrbar zum Gestell ist, als auch mittels entsprechenden Öffnungen oder Bohrungen als Schnittstelle für einen Arbeitstisch, der hinsichtlich seiner Position am Arbeitstisch fixiert sein soll.

Das Gestell kann optional mit Rädern versehen sein, sodass es auch als Wagen für Bearbeitungsmaschine dient. Zusätzlich kann das Gestell optional eine Saugvorrichtung wie einen Staubsauger aufnehmen, mit dem während der Bearbeitung Staub, Späne und andere Materialreste abgesaugt werden.

Vorzugsweise weist die die Plattform eine erste Schnittstelle, an der ein Arbeitstisch relativ zu dem Gestell verfahrbar montierbar ist, und/oder eine zweite Schnittstelle, an der ein Arbeitstisch relativ zu dem Gestell fixiert montierbar ist, auf. Die erste Schnittstelle kann somit für einen verfahrbaren Arbeitstisch vorgesehen sein, wobei die zweite Schnittstelle für einen nicht verfahrbaren Arbeitstisch vorgesehen sein. Der verfahrbare Arbeitstisch kann während des Arbeitsvorgangs, insbesondere mittels Rollen, relativ zu dem Gestell verfahren werden, während das Werkstück auf dem Arbeitstisch liegt. Dabei ist die jeweilige Trennlänge durch die maximale Verfahrdistanz begrenzt. Bei einem nicht verfahrbaren Arbeitstisch wird das Werkstück in der Regel händisch über den hinsichtlich seiner Position fest am Gestell installierten Arbeitstisch bewegt, sodass theoretisch unendlich lange Trennlängen möglich sind.

In vorteilhafter Ausgestaltung weist die erste Schnittstelle sich im Wesentlichen parallel zu einer Längsrichtung des Gestells erstreckende Führungsschienen zur Aufnahme von Führungsrollen eines Arbeitstischs auf, um den Arbeitstisch relativ zu dem Gestell verfahrbar an den Führungsschienen zu montieren. Die Führungsschienen können C-Profilschienen sein, in denen die Führungsrollen geführt sind und abrollen. Um ein Herausfallen der Führungsrollen an den Enden der Führungsschienen zu verhindern, bietet es sich an, dass die Enden der Führungsschienen entweder geschlossen sind oder in der Nähe der Enden Anschlagvorrichtungen für die Führungsrollen in der Führungsschiene vorgesehen sind. Vorzugsweise können die Anschlagvorrichtungen geöffnet und geschlossen werden, damit der Arbeitstisch entnommen bzw. eingesetzt werden kann. Die Führungsrollen können insbesondere an der Unterseite des Arbeitstischs angeordnet sein, somit sind auch die Führungsschienen unterhalb des Arbeitstischs angeordnet, wenn dieser an den Führungsschienen montiert ist.

Die erste Schnittstelle kann zumindest zwei Führungsschienenpaare aufweisen, wobei jedes Führungsschienenpaar zwei parallel zueinander verlaufende Führungsschienen, insbesondere C-Profilschienen, aufweist, die einander zugewandte Profilöffnungen aufweisen. Die Ausgestaltung mit Führungsschienenpaaren ermöglicht es, dass der Arbeitstisch mehrteilig ist, wobei jedes Tischteil verfahrbar an einem Führungsschienenpaar montiert werden kann.

Vorzugsweise sind die beiden Führungsschienen eines jeden Führungsschienenpaars im Querschnitt betrachtet unterschiedlich groß. Insbesondere kann an Außenseiten des Gestells eine Führungsschiene vorgesehen sein, die größer ist als eine jeweilige innere Führungsschiene.

Die Führungsschienen können zumindest teilweise eine Abrollfläche mit einem daran angeordneten Führungselement für Führungsrollen des Arbeitstischs aufweisen. Das Führungselement kann beispielsweise eine Rundstange sein. Die Abrollfläche ist die Fläche der Führungsschienen, auf denen die jeweiligen Führungsrollen des Arbeitstischs aufliegen und, wenn der Arbeitstisch verfahren wird, abrollen. Das Führungselement kann an der Abrollfläche angeordnet sein, insbesondere so, dass es sich in Richtung der jeweiligen Führungsschiene erstreckt und auf der Abrollfläche aufliegt. Das Führungselement kann mit der Führungsschiene einteilig ausgestaltet oder fest, insbesondere stoffschlüssig, mit diesem verbunden sein.

Vorzugsweise weist die zweite Schnittstelle in der Plattform vorgesehene Montageöffnungen zum Einführen jeweils eines Montagezapfens eines Arbeitstischs auf.

Wenn die Montagezapfen vorzugsweise von oben in die Montageöffnungen eingeführt werden, greifen diese in die zweite Schnittstelle ein, sodass der Arbeitstisch mit der Plattform verbunden bzw. an der Plattform montiert ist, und zwar idealerweise derart, dass er hinsichtlich seiner Position relativ zu dem Gestell festgelegt ist. Diese Montage dient insbesondere für einen nicht verfahrbaren Arbeitstisch, auf dem die zu bearbeitenden Werkstücke händisch vom Nutzer der Maschine bewegt werden, wobei theoretisch unendliche Trennlängen möglich sind.

Jede Montageöffnung kann einen Arretierungsabschnitt aufweisen, wobei jede Montageöffnung außerdem entweder einen Einführungsabschnitt aufweist, dessen Durchmesser größer ist als der Durchmesser des Arretierungsabschnitts, oder einseitig offen ist, sodass die Montageöffnung nur teilweise von der Plattform umrandet ist. Idealerweise sind der Durchmesser des Arretierungsabschnitts und der Außendurchmesser des eingreifenden Abschnitts des Montagezapfens so aufeinander abgestimmt, dass beim seitlichen Einführen des eingreifenden Abschnitts des Montagezapfens in den Arretierungsabschnitt ein Kraftschluss zwischen Montagezapfen und Arretierungsabschnitt entsteht, durch den der Arbeitstisch sicher an der Plattform gehalten wird. Zuvor wird der Montagezapfen von oben in den Einführungsabschnitt der Montageöffnung eingeführt, deren Durchmesser größer ist als der Durchmesser des Arretierungsabschnitts. Bei einer einseitig offenen Montageöffnung bedarf es keines Einführungsabschnitts. Eine solche kann an einem Ende einer jeweiligen Führungsschiene vorgesehen sein, das heißt die Montageöffnung bzw. der Arretierungsabschnitt erstreckt sich in das Ende der Führungsschiene.

Das Gestell kann ferner einen Absaugkanal zum Absaugen von Staub und/oder Spänen aufweisen, wobei der Absaugkanal vorzugsweise zwischen zwei Führungsschienenpaaren angeordnet ist. Der Absaugkanal kann sich in einen Zwischenraum zwischen zwei Tischteilen, die an den jeweiligen Führungsschienenpaaren montiert sind, erstrecken, insbesondere von der Unterseite des Arbeitstischs kommend und mit der Oberkante des Arbeitstischs bündig abschließend.

Dadurch, dass der Absaugkanal bündig mit der Oberkante des Arbeitstischs abschließt, ist eine unmittelbare Absaugung von Staub, Spänen und anderen Materialresten gewährleistet. Zugleich ist die Verfahrbarkeit der Tischteile gegeben, da der Absaugkanal nicht in den Verfahrweg des Arbeitstischs ragt, sondern zwischen den zwei Tischteilen angeordnet ist.

Die erfindungsgemäße Bearbeitungsmaschine ist insbesondere eine Steinbearbeitungsmaschine, beispielsweise eine Steintrennmaschine, und umfasst ein Werkzeug, insbesondere ein Sägeblatt, einen Elektromotor zum Antreiben des Werkzeugs und ein Gestell.

Die Erfindung betrifft außerdem einen Arbeitstisch für eine Bearbeitungsmaschine, insbesondere für eine Steinbearbeitungsmaschine, beispielsweise eine Steintrennmaschine. Der Arbeitstisch weist eine Montagevorrichtung zum Montieren des Arbeitstischs an einer Plattform eines Gestells auf.

Die Montagevorrichtung kann beispielsweise die zuvor schon beschriebenen Führungsrollen, insbesondere für die Montage an der ersten Schnittstelle, oder Montagezapfen, insbesondere für die Montage an der zweiten Schnittstelle, aufweisen. Zumindest manche der Führungsrollen können eine Umfangsnut aufweisen, damit die jeweilige Führungsrolle durch die Umfangsnut mit dem Führungselement der Führungsschienen in Eingriff ist, sodass die Führungsrolle besser in der Führungsschiene geführt ist.

Der Arbeitstisch kann zwei oder mehr separate Tischteile aufweisen, wobei jedes Tischteil an einem Führungsschienenpaar montierbar ist.

Nachfolgend wird die Erfindung schematisch und beispielhaft mit Bezug auf ein in den Zeichnungen gezeigtes Ausführungsbeispiel erläutert. Darin zeigt:
- Fig. 1: eine Bearbeitungsmaschine mit einem Gestell gemäß einem Ausführungsbeispiel, wobei ein verfahrbarer, zweiteiliger Arbeitstisch an dem Gestell montiert ist,
- Fig. 2: die Bearbeitungsmaschine mit dem Gestell aus Fig. 1, wobei kein Arbeitstisch an dem Gestell montiert ist,
- Fig. 3: die Bearbeitungsmaschine mit dem Gestell aus Fig. 1, wobei ein nicht verfahrbarer Arbeitstisch an dem Gestell montiert ist,
- Fig. 4: eine Draufsicht auf Abschnitte einer Führungsschiene, welche Montageöffnungen aufweisen,
- Fig. 5: eine Schnittansicht gemäß der Schnittlinie V-V in Fig. 4 bei montiertem Arbeitstisch und
- Fig. 6: eine Querschnittsansicht des verfahrbaren, zweiteiligen Arbeitstischs aus Fig. 1 und dessen Montage an dem Gestell.

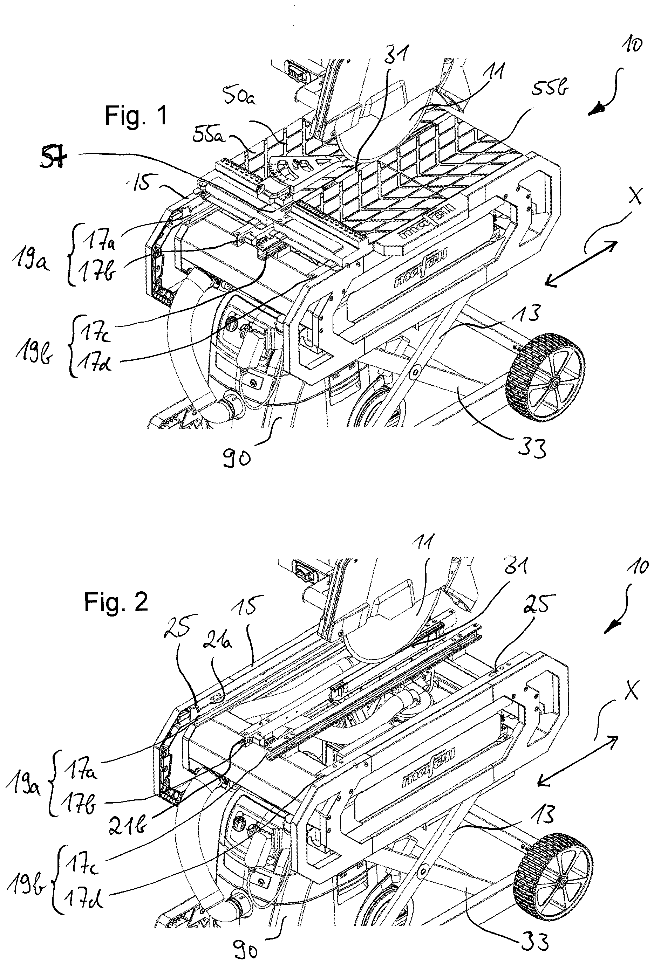

Fig. 1 zeigt eine Bearbeitungsmaschine 10, nämlich im vorliegenden Ausführungsbeispiel eine Steintrennmaschine, mit einem als Sägeblatt ausgebildeten Werkzeug 11, einem nicht dargestellten Elektromotor, der das Werkzeug 11 antreibt, und einem fahrbaren Gestell 13. Auf dem Gestell 13 ist eine Saugvorrichtung 90 zum Absaugen von Staub, Spänen oder anderen Materialresten angeordnet, die über eine Absaugverbindung mit Schläuchen an einen Absaugkanal 31 angeschlossen ist. Zudem weist das Gestell 13 eine Scherenkonstruktion 33 auf, sodass es höhenverstellbar ist.

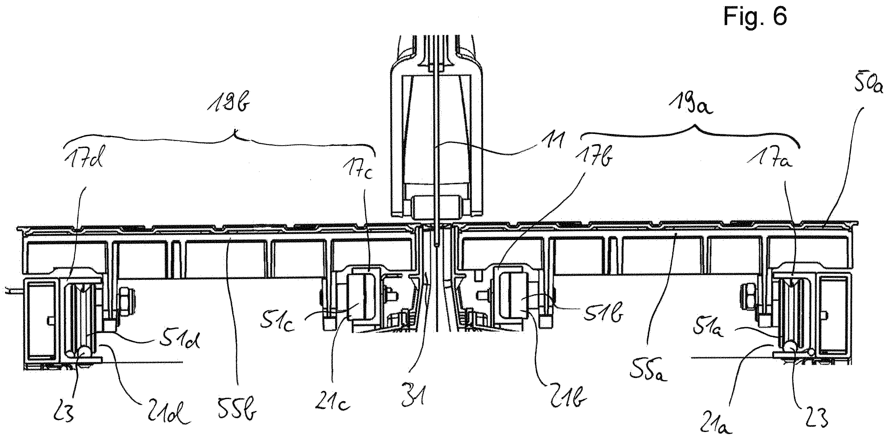

Das Gestell 13 weist eine in Fig. 2 gezeigte Plattform 15 auf, die zur Montage unterschiedlicher Arbeitstische ausgebildet ist. Wie auch aus Fig. 6 ersichtlich, ist die Plattform 15 im vorliegenden Ausführungsbeispiel mit zwei Führungsschienenpaaren 19a, 19b versehen, die je zwei an dem Gestell 13 befestigte und sich parallel zu einer Längsrichtung X des Gestells 13 erstreckende Führungsschienen 17a, 17b, 17c, 17d aufweisen, welche im vorliegenden Ausführungsbeispiel als C-Profilschienen ausgebildet sind. Jeweilige Profilöffnungen 21a, 21b, 21c, 21d der Führungsschienen 17a, 17b, 17c, 17d sind innerhalb eines jeden Führungsschienenpaaren 19a, 19b einander zugewandt.

Aus Fig. 6 ist ersichtlich, dass die beiden Führungsschienen 17a, 17b, 17c, 17d innerhalb eines Führungsschienenpaars 19a, 19b unterschiedlich groß sind. So weist das Führungsschienenpaar 19a eine an einer Außenseite des Gestells 13 angeordnete größere Führungsschiene 17a und eine kleinere Führungsschiene 17b auf, und das Führungsschienenpaar 19b weist eine an der gegenüberliegenden Außenseite des Gestells 13 angeordnete größere Führungsschiene 17d und eine kleinere Führungsschiene 17c auf. Die beiden größeren Führungsschienen 17a, 17d sind an ihrer unteren Abrollfläche mit einem Führungselement 23 in Form einer Rundstange versehen.

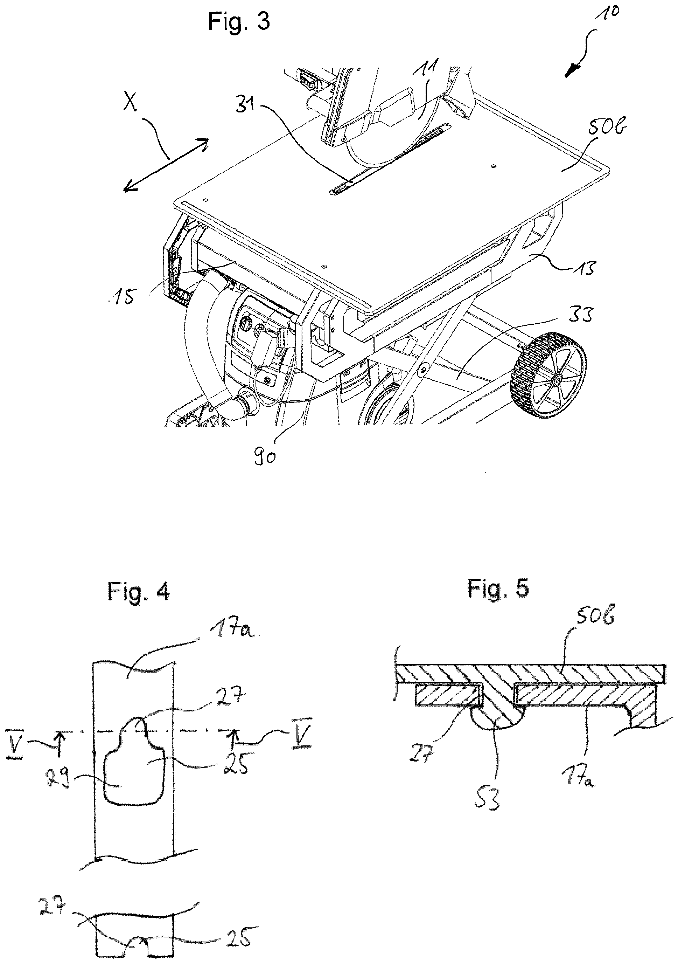

Außerdem weisen die beiden größeren Führungsschienen 17a, 17d jeweils Montageöffnungen 25 auf, die in Fig. 2 sichtbar und in Fig. 4 detaillierter gezeigt sind. Die Montageöffnungen 25 sind auf zwei unterschiedliche Arten ausgestaltet. Zum einen gibt es Montageöffnungen 25, welche einen Arretierungsabschnitt 27 und einen Einführungsabschnitt 29 die ohne Trennung dazwischen ineinander übergehen. Zum anderen können Montageöffnungen 25 auch nur mit einem Arretierungsabschnitt 27 ausgebildet sein, wenn sie an einem der Enden in der Längsrichtung X der jeweiligen Führungsschiene 17a, 17d angeordnet sind, wobei der Arretierungsabschnitt 27 dann nur an einer Seite vom Material der jeweiligen Führungsschiene 17a, 17d begrenzt ist und an seiner gegenüberliegenden Seite offen, also nicht von der Plattform 15 bzw. der jeweiligen Führungsschiene 17a, 17d begrenzt, ist. Der Durchmesser der Einführungsabschnitte 29 ist größer als der Durchmesser der Arretierungsabschnitte 27.

Die Führungsschienenpaare 19a, 19b mit den Führungsschienen 17a, 17b, 17c, 17d bilden eine Schnittstelle für die Montage und Demontage eines entlang dem Gestell 13 verfahrbaren Arbeitstischs 50a aus. Der Arbeitstisch 50a ist ein geteilter Arbeitstisch und weist zwei Tischteile 55a, 55b auf, die im vorliegenden Ausführungsbeispiel gleich groß sind, also jeweils eine Hälfte des Arbeitstischs 50a ausbilden. Grundsätzlich kann der Arbeitstisch 50a aber auch in mehrere Tischteile unterteilt sein. Der Absaugkanal 31 erstreckt sich von der Unterseite kommend in den Zwischenraum zwischen den beiden Tischteilen 55a, 55b und schließt bündig mit der Oberkante des Arbeitstischs 50a ab.

Die Tischteile 55a, 55b sind durch einen Riegel 57 miteinander verbunden, sodass die beiden Tischteile 55a, 55b in ihrer Verfahrrichtung, das heißt in der Längsrichtung X, miteinander gekoppelt sind. Durch Herausnehmen des Riegels 57 werden die beiden Tischteile 55a, 55b voneinander entkoppelt und können einzeln in der Verfahrrichtung verfahren werden.

Jeder Tischteil 55a, 55b weist an seiner Unterseite, wie insbesondere in Fig. 6 gezeigt, zwei Führungsrollen 51a, 51b, 51c, 51d auf, wobei die beiden Führungsrollen 51a, 51b, 51c, 51d eines jeden Tischteils 55a, 55b unterschiedlich groß sind. Jeder Tischteil 55a, 55b ist einem Führungsschienenpaar 19a, 19b zugeordnet, das heißt die beiden Führungsrollen 51a, 51b, 51c, 51d jedes Tischteils 55a, 55b sind jeweils in den beiden Führungsschienen 17a, 17b, 17c, 17d eines Führungsschienenpaars 19a, 19b angeordnet, rollen darin ab und werden von der jeweiligen Führungsschiene 17a, 17b, 17c, 17d geführt. Die Führungsrollen 51a, 51b, 51c, 51d sind hinsichtlich ihrer jeweiligen Größe an die Größere der ihnen zugeordneten Führungsschiene 17a, 17b, 17c, 17d angepasst. Zur verbesserten Führung der Führungsrollen 17a, 17d weisen diese eine Umfangsnut auf, mit denen sie auf dem Führungselement 23 aufliegen.

Der Arbeitstisch 50a ist somit verfahrbar zum Gestell 13. Bei einem Bearbeitungsvorgang kann ein Werkstück auf dem Arbeitstisch 50a angeordnet und mit diesem zur Bearbeitung mittels des Werkzeugs 11 bewegt werden, was sehr komfortabel hinsichtlich der Bedienung ist.

Die Montageöffnungen 25 bilden eine weitere Schnittstelle für die Montage und Demontage eines Arbeitstischs 50b aus, der in Fig. 3 näher gezeigt ist und dessen Befestigung aus Fig. 5 ersichtlich ist. Der Arbeitstisch 50b ist im vorliegenden Ausführungsbeispiel einteilig und weist einen Schlitz für den Absaugkanal 31 auf. Im montierten Zustand schließt der Absaugkanal 31 mit der Oberkante des Arbeitstischs 50b bündig ab.

Die Montage des Arbeitstischs 50b erfolgt mittels an der Unterseite des Arbeitstischs 50b angeordneten Montagezapfen 53, die insbesondere mit einem Pilzkopf versehen sein können. Dabei wird der Arbeitstisch 50b zunächst von oben auf die Plattform 15 aufgelegt, wobei die Montagezapfen 53 durch die Einführungsabschnitte 29 bzw. außerhalb der jeweiligen Führungsschiene 17a, 17d geführt werden. Wenn der Arbeitstisch 50b auf der Plattform aufliegt und sich die Montagezapfen 53 in den Montageöffnungen 25 befinden, wird der Arbeitstisch 50b in der Längsrichtung X gedrückt, sodass die Montagezapfen 53, wie in Fig. 5 gezeigt, im Arretierungsabschnitt 27 der jeweiligen Montageöffnung 25 arretiert werden. Dadurch ist der Arbeitstisch 50b hinsichtlich seiner Position relativ zum Gestell 13 bzw. der Plattform 15 festgelegt und kann erst durch Kraftaufwand, beispielsweise einen Ruck, wieder aus den Arretierungsabschnitten 27 bewegt werden.

Der Arbeitstisch 50b ist somit nicht verfahrbar. Somit können jedoch theoretisch unendlich lange Trennlängen erreicht werden, da das jeweilige Werkstück auf den Arbeitstisch 50b gelegt und dann händisch auf diesem bewegt wird, ohne dass der Arbeitstisch 50b mitbewegt wird.

Somit zeigt die vorliegende Erfindung eine Plattform, mit der eine Vielzahl von unterschiedlichen Arbeitstischen nutzbar ist, wobei die Arbeitstische insbesondere schnell und mit wenig Aufwand gewechselt werden können, ohne dass ein aufwändiger Umbau des Gestells nötig ist. Es versteht sich, dass die hier gezeigten Arbeitstische nur beispielhaft sind. Beispielsweise können weitere Arbeitstische vorhanden sein, etwa für bestimmte Materialien und Werkstücke wie etwa Dachziegel. Zudem können Befestigungen anderer Art vorgesehen sein, da es erfindungsgemäß nur erforderlich ist, dass die Schnittstellen der Plattform 15 und der jeweiligen Arbeitstische aufeinander abgestimmt sind.

### Bezugszeichenliste

- 10: Bearbeitungsmaschine
- 11: Werkzeug
- 13: Gestell
- 15: Plattform
- 17a: Führungsschiene
- 17b: Führungsschiene
- 17c: Führungsschiene
- 17d: Führungsschiene
- 19a: Führungsschienenpaar
- 19b: Führungsschienenpaar
- 21a: Profilöffnung
- 21b: Profilöffnung
- 21c: Profilöffnung
- 21d: Profilöffnung
- 23: Führungselement
- 25: Montageöffnung
- 27: Arretierungsabschnitt
- 29: Einführungsabschnitt
- 31: Absaugkanal
- 33: Scherenkonstruktion

- 50a: Arbeitstisch
- 50b: Arbeitstisch
- 51a: Führungsrolle
- 51b: Führungsrolle
- 51c: Führungsrolle
- 51d: Führungsrolle
- 53: Montagezapfen
- 55a: Tischteil
- 55b: Tischteil
- 57: Riegel

- 90: Saugvorrichtung

- X: Längsrichtung

## Patentansprüche

1. Gestell (13) für eine Bearbeitungsmaschine (10), insbesondere für eine Steinbearbeitungsmaschine, beispielsweise eine Steintrennmaschine, das eine Plattform (15) für die Montage und Demontage eines Arbeitstischs (50a, 50b) an dem Gestell (13) aufweist, wobei die Plattform (15) eine oder mehrere Schnittstellen zum Aufnehmen von unterschiedlichen Arbeitstischen (50a, 50b) aufweist.

2. Gestell (13) nach Anspruch 1,
wobei die Plattform (15) eine erste Schnittstelle, an der ein Arbeitstisch (50a, 50b) relativ zu dem Gestell (13) verfahrbar montierbar ist, und/oder eine zweite Schnittstelle, an der ein Arbeitstisch (50a, 50b) relativ zu dem Gestell (13) fixiert montierbar ist, aufweist.

3. Gestell (13) nach Anspruch 2,
wobei die erste Schnittstelle sich im Wesentlichen parallel zu einer Längsrichtung (X) des Gestells (13) erstreckende Führungsschienen (17a, 17b, 17c, 17d), insbesondere C-Profilschienen, zur Aufnahme von Führungsrollen (51a, 51b, 51c, 51d) eines Arbeitstischs (50a, 50b) aufweist, um den Arbeitstisch (50a, 50b) relativ zu dem Gestell (13) verfahrbar an den Führungsschienen (17a, 17b, 17c, 17d) zu montieren.

4. Gestell (13) nach Anspruch 2 oder 3,
wobei die erste Schnittstelle zumindest zwei Führungsschienenpaare (19a, 19b) aufweist, wobei jedes Führungsschienenpaar (19a, 19b) zwei parallel zueinander verlaufende Führungsschienen (17a, 17b, 17c, 17d), insbesondere C-Profilschienen, aufweist, die einander zugewandte Profilöffnungen (21a, 21b, 21c, 21d) aufweisen.

5. Gestell (13) nach Anspruch 4,
wobei die beiden Führungsschienen (17a, 17b, 17c, 17d) eines jeden Führungsschienenpaars (19a, 19b) im Querschnitt betrachtet unterschiedlich groß sind.

6. Gestell (13) nach einem der Ansprüche 3 bis 5,
wobei die Führungsschienen (17a, 17b, 17c, 17d) zumindest teilweise eine Abrollfläche mit einem daran angeordneten Führungselement (23) aufweisen.

7. Gestell (13) nach einem der Ansprüche 2 bis 6,
wobei die zweite Schnittstelle in der Plattform (15) vorgesehene Montageöffnungen (25) zum Einführen jeweils eines Montagezapfens (53) eines Arbeitstischs (50a, 50b) aufweist.

8. Gestell (13) nach Anspruch 7,
wobei jede Montageöffnung (25) einen Arretierungsabschnitt (27) aufweist, wobei jede Montageöffnung (25) außerdem entweder einen Einführungsabschnitt (29) aufweist, dessen Durchmesser größer ist als der Durchmesser des Arretierungsabschnitts (27), oder einseitig offen ist, sodass die Montageöffnung (25) nur teilweise von der Plattform (15) umrandet ist.

9. Gestell (13) nach einem der vorstehenden Ansprüche,
das außerdem einen Absaugkanal (31) zum Absaugen von Staub und/oder Spänen aufweist, wobei der Absaugkanal (31) vorzugsweise zwischen zwei Führungsschienenpaaren (19a, 19b) angeordnet ist.

10. Bearbeitungsmaschine (10), insbesondere Steinbearbeitungsmaschine, beispielsweise Steintrennmaschine, umfassend
ein Werkzeug (11), insbesondere ein Sägeblatt,
einen Elektromotor zum Antreiben des Werkzeugs (11) und
das Gestell (13) nach einem der vorstehenden Ansprüche.

11. Arbeitstisch (50a, 50b) für eine Bearbeitungsmaschine (10), insbesondere für eine Steinbearbeitungsmaschine, beispielsweise Steintrennmaschine, der eine Montagevorrichtung zum Montieren des Arbeitstischs (50a, 50b) an einer Plattform (15) eines Gestells (13) nach einem der Ansprüche 1 bis 9 aufweist.

12. Arbeitstisch (50a, 50b) nach Anspruch 11,
wobei die Montagevorrichtung Führungsrollen (51a, 51b, 51c, 51d), insbesondere für die Montage an der ersten Schnittstelle, oder Montagezapfen (53), insbesondere für die Montage an der zweiten Schnittstelle, aufweist.

13. Arbeitstisch (50a) nach Anspruch 11 oder 12,
wobei der Arbeitstisch (50a) zwei oder mehr separate Tischteile (55a, 55b) aufweist, wobei jedes Tischteil (55a, 55b) an einem Führungsschienenpaar (19a, 19b) montierbar ist.
